# EUROPÄISCHE PATENTSCHRIFT

(11) **EP 3 543 928 B1**
(45) Veröffentlichungstag und Bekanntmachung des Hinweises auf die Patenterteilung: **11.02.2026**
(21) Anmeldenummer: 19164008.5
(22) Anmeldetag: 20.03.2019
(51) Int. Cl.: G06Q 10/08

(54) **VERFAHREN ZUM ÖFFNEN EINER TÜR EINES LIEFERWAGENS**
METHOD FOR OPENING A DOOR OF A DELIVERY VEHICLE
PROCÉDÉ D'OUVERTURE D'UNE PORTE D'UNE CAMIONNETTE

(30) Priorität: 21.03.2018 DE 102018106650
(43) Veröffentlichungstag der Anmeldung: 25.09.2019
(73) Patentinhaber: Deutsche Post AG, 53113 Bonn (DE)
(72) Erfinder: Orth, Felix, 52066 Aachen (DE)
(74) Vertreter: Michalski Hüttermann & Partner Patentanwälte mbB

(56) Entgegenhaltungen:
- EP-A1- 3 104 340
- EP-A1- 3 171 307
- DE-A1- 102011 018 901
- GB-A- 2 553 039
- US-A1- 2008 018 475
- US-A1- 2015 006 005
- US-A1- 2016 189 087
- US-A1- 2016 238 374
- US-A1- 2017 293 885
- US-B1- 9 552 564
- M�LLER-ARNOLD BENEDIKT: "Ab geht die Post", WIRTSCHAFTSGIPFEL 2021 S�DDEUTSCHE ZEITUNG, 15 November 2021 (2021-11-15), Munich, XP055869010, Retrieved from the Internet <URL:https://zeitung.sueddeutsche.de/webapp/issue/SZ/2021-11-15/page_2.498161/article_1.5462974/article.html>

## Beschreibung

### Technisches Gebiet

Die Erfindung betrifft ein Verfahren zum Lokalisieren wenigstens eines in einem Laderaum eines Lieferwagens transportierten Objektes, wobei der Laderaum eine Mehrzahl Türen zum Entnehmen des wenigstens einen Objektes aus dem Laderaum und der Lieferwagen eine Steuerung aufweist. Die Erfindung betrifft zudem einen Lieferwagen mit einem Laderaum zum Transportieren wenigstens eines Objektes mit einer Steuerung.

### Hintergrund der Erfindung

Zum Überbringen von Objekten, wie beispielsweise Pakete, Briefsendungen oder sonstige transportable Güter, werden seit einiger Zeit Elektrofahrzeuge als Lieferwagen eingesetzt. Hinter einer Fahrerkabine des Lieferwagens ist ein Laderaum vorgesehen, in dem die Objekte transportiert werden. Die Elektrofahrzeuge werden in der Regel nur mit den notwendigsten Einrichtungen versehen, um die von dem Gewicht des Elektrofahrzeugs abhängige Reichweite zu maximieren. Insofern wird in dem Laderaum oftmals auf ein Regalsystem verzichtet, so dass die Objekte auf einer Ladefläche als Boden des Laderaums abgestellt sind.

US 2016/238374 A1 beschreibt Verfahren, Vorrichtungen und Systeme zum Quantifizieren eines Raums innerhalb eines Behälters unter Verwendung eines entfernbaren Scanners

US 2017/293885 A1 beschreibt ein Paketraumsystem, welches mindestens ein Regal, mindestens einen Sensor, der zum Erfassen von Gegenständen in dem mindestens einen Regal konfiguriert ist, mindestens eine Dateneingabevorrichtung und mindestens einen Computer umfasst, der mit dem mindestens einen Sensor und dem mindestens einen Dateneingabegerät gekoppelt ist.

EP 3 171 307 A1 beschreibt ein Regal- und Paketortungssystem für Lieferfahrzeuge. Dieses umfasst ein oder mehrere Regale zur Lagerung von Paketen in dem Lieferfahrzeug während der Zustellung.

US 2016/189087 A1 betrifft das Bereitstellen von Informationen zur Anleitung derjenigen, die an der Aufteilung mehrerer Pakete auf eine in einen LKW oder ein anderes Lieferfahrzeug verladene Fracht beteiligt sind, wodurch die Effizienz bei der endgültigen Abholung der einzelnen Pakete an ihren jeweiligen entsprechenden Lieferzielen optimiert wird.

US 2008/018475 A1 betrifft ein Verfahren und eine Anordnung zum Erhalten von Informationen über ein Radiofrequenzidentifikationsgerät (RFID) oder ein Objekt, auf dem das RFID-Gerät montiert ist, wenn sich das RFID-Gerät in einem durch einen Rahmen definierten Raum befindet.

US 9 552 564 B1 beschreibt Aspekte eines autonomen Liefertransportnetzwerks für die Auslieferung von Artikeln. Das Netzwerk umfasst ein zentrales Verwaltungssystem, das den Betrieb eines Netzwerks von Fahrzeugen zur Auslieferung von Artikeln steuert.

US 2015/006005 A1 betrifft ein autonomes unbemanntes Straßenfahrzeug und beschreibt, wie es für Lieferungen eingesetzt werden kann. Das unbemannte Fahrzeug kann autonom auf befestigten Straßen agieren.

EP 3 104 340 A1 beschreibt unter anderem ein Verfahren zum Bewirken des Entriegelns und Verriegelns zumindest einer Tür eines Fahrzeugs für eine Zustellung einer Sendung in das Fahrzeug.

DE 10 2011 018901 A1 betrifft ein Verfahren zur Betätigung eines Kraftfahrzeugschließsystems durch einen Dienstleistungsanbieter oder einen Dienstleistungsempfänger, der nicht Eigentümer des Kraftfahrzeugs ist, zur Erbringung oder zur Annahme einer Serviceleistung.

Durch die während einer Kurvenfahrt des Lieferwagens auftretenden Trägheitskräfte können die Objekte in dem Laderaum verrutschen. Ein an einer rechten Seitentür des Laderaums abgestelltes Objekt kann nach einigen Fahrmanövern an einer linken Seitentür des Laderaums zu liegen kommen. Entsprechend kann ein Suchen und Auffinden eines aus dem Laderaum zu entnehmenden Objektes unnötig viel Zeit beanspruchen. Da der Laderaum nicht selten mit Dutzenden oder gar Hunderten auszuliefernder Objekten beladen ist, kann sich ein durch solches Suchen der entlang einer Fahrtroute des Lieferwagens nacheinander zu entladenden Objekte auf einen nicht unerheblichen Zeitverlust summieren und zu nicht vernachlässigbaren Mehrkosten führen.

GB 2 553 039 A beschreibt ein Fahrzeug, das Fracht transportiert und einen Laderaum für die Fracht, ein Kamerasystem mit einer Vielzahl von Kameras, die Bilder der Fracht aufnehmen, und ein Bestimmungsmodul, das aus den Bildern eine dreidimensionale räumliche Darstellung der Fracht erstellt, umfasst. Vorzugsweise identifiziert das Modul einen Identifikationscode auf der Fracht. Daraus lassen sich etwa Position, Gewicht, Größe oder Temperatur der Ladung ermitteln. Das Fahrzeug kann über ein Präsentationsgerät zur Darstellung des 3D-Modells der Ladung verfügen. Außerdem wird ein Verfahren bereitgestellt, bei dem mithilfe eines Kamerasystems, das Bestandteil des Fahrzeugs ist, Bilder der in einem Laderaum des Fahrzeugs angeordneten Ladung aufgenommen und eine dreidimensionale räumliche Darstellung der Ladung erstellt wird.

### Beschreibung der Erfindung

Ausgehend von dieser Situation ist es eine Aufgabe der vorliegenden Erfindung, ein Verfahren und einen entsprechenden Lieferwagen anzugeben, um in einem Laderaum des Lieferwagens transportierte Objekte in einfacher Weise ohne zeitaufwändiges Suchen lokalisieren zu können.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch ein computerunterstütztes Verfahren zum Lokalisieren wenigstens eines in einem Laderaum eines Lieferwagens transportierten Objektes einer Mehrzahl auf einer Ladefläche des Laderaums nebeneinander angeordneter Objekte, wobei der Laderaum eine Mehrzahl Türen zum Entnehmen des wenigstens einen Objektes aus dem Laderaum und eine an der Decke des Laderaums vorgesehene Positionierbestimmungseinrichtung aufweist, wobei die Mehrzahl Türen eine linke Seitentür, eine rechte Seitentür und eine Heckklappe des Laderaums umfassen, und der Lieferwagen eine Steuerung aufweist, mit den Schritten: Erfassen eines Ablageortes des Objektes in dem Laderaum beim Beladen des Laderaumes mittels der mit der Steuerung in Kommunikationsverbindung stehenden und eine Kamera und/oder einen Laserscanner umfassende Positionierbestimmungseinrichtung, während einer Fahrt des Lieferwagens Nachhalten einer in der Datenbank der Steuerung hinterlegten aktuellen Position des Objektes auf Basis einer von einem Algorithmus zur Bildverarbeitung aus den von der Positionierbestimmungseinrichtung erhaltenen Informationen ermittelten aktuellen Position des Objektes mittels der Steuerung, und zum Entnehmen des wenigstens einen Objektes aus dem Laderaum, Bestimmen der Tür aus der Mehrzahl Türen mit dem geringsten Abstand zu der in der Datenbank hinterlegten aktuellen Position mittels der Steuerung, Anzeigen der bestimmten Tür mittels einer mit der Steuerung in Kommunikationsverbindung stehenden Anzeigeneinrichtung, Öffnen der bestimmten Tür mittels der Steuerung und Anzeigen der in der Datenbank hinterlegten aktuellen Position des wenigstens einen Objektes in dem Laderaum mittels der Anzeigeneinrichtung.

Nach einer bevorzugten Weiterbildung umfasst das Verfahren die Schritte Beladen des Laderaums mit einer Mehrzahl Objekte und Bestimmen der aktuellen Position aller Objekte in dem Laderaum während der Fahrt des Lieferwagens mittels der mit der Steuerung in Kommunikationsverbindung stehenden Positionsbestimmungseinrichtung.

Die Aufgabe wird zudem durch einen Lieferwagen mit einem Laderaum zum Transportieren wenigstens eines Objektes mit einer Steuerung, einer mit der Steuerung in Kommunikationsverbindung stehenden Positionsbestimmungseinrichtung eingerichtet zum Bestimmen einer aktuellen Position des wenigstens einen Objektes in dem Laderaum während einer Fahrt des Lieferwagens und einer mit der Steuerung in Kommunikationsverbindung stehenden Anzeigeneinrichtung gelöst, wobei der Laderaum eine Mehrzahl Türen zum Entnehmen des wenigstens einen Objektes aus dem Laderaum aufweist, die Steuerung eingerichtet ist, zum Entnehmen des wenigstens einen Objektes aus dem Laderaum, die Tür aus der Mehrzahl Türen mit dem geringsten Abstand zu der aktuellen Position des wenigstens einen Objektes zu bestimmen, die Anzeigeneinrichtung zum Anzeigen der bestimmten Tür anzusteuern und/oder ein Öffnen der bestimmten Tür zu bewirken und die Anzeigeneinrichtung zum Anzeigen der aktuellen Position des wenigstens einen Objektes in dem Laderaum anzusteuern.

Ein wesentlicher Punkt der Erfindung liegt darin, dass die jeweils aktuelle Position des wenigstens einen Objektes in dem Laderaum während der Fahrt des Lieferwagens nachgehalten wird. Unabhängig davon, ob das wenigstens eine Objekt beispielsweise bedingt durch in Kurvenfahrten, durch Beschleunigen oder Abbremsen auftretende Trägheitskräfte verrutscht und derart seine Position in dem Laderaum ändert, wird durch die Positionsbestimmungseinrichtung jeweils die aktuelle Position bestimmt bzw. nachgehalten. Sofern nun zum Entnehmen des wenigstens einen Objektes aus dem Laderaum eine Tür der Mehrzahl Türen geöffnet werden soll, wird die Tür aus der Mehrzahl Türen mit dem geringsten Abstand zu der aktuellen Position des wenigstens einen Objektes bestimmt und die bestimmte Tür angezeigt oder geöffnet. Zudem wird die aktuelle Position des zu entnehmenden wenigstens einen Objektes angezeigt.

Im Ergebnis wird einem Zusteller signalisiert, durch welche Tür hindurch dieser das zu entnehmende wenigstens eine Objekt am Einfachsten erreichen kann und wo in dem Laderaum das zu entnehmende wenigstens eine Objekt zu finden ist. Durch die vorbeschriebenen Maßnahmen wird also in besonders vorteilhafter Weise unnötiges Suchen des zu entnehmenden wenigstens einen Objektes in dem Laderaum sowie unnötige Leerwege beim Öffnen unterschiedlicher Türen vermieden. Durch das vorgeschlagene Verfahren sowie den Lieferwagen wird beim Ausliefern von Sendungen als Objekte eine signifikante Zeitersparnis im Zustellbetrieb erreicht, da die ansonsten im Stand der Technik notwendige Zeit für manuelles Suchen der oftmals durch Kurvenfahrten, Beschleunigen oder Abbremsen verrutschten Objekte in dem Laderaum und Auffinden einer für das Entnehmen der Objekte geeigneten Tür vollständig entfällt. Denn durch die Anzeigeneinrichtung erhält der Zusteller einen Hinweis auf die zu öffnende Tür, durch die hindurch das Objekt am Einfachsten aus dem Laderaum zu entnehmen ist. Insofern ist der geringste Abstand zwischen der zu öffnenden Tür und der aktuellen Position durch die Tür bestimmt, durch die hindurch der Zusteller das Objekt besonders gut erreichen und aus dem Laderaum entnehmen kann. Bevorzugt ist der geringste Abstand über die Luftlinie des jeweiligen Objektes und der Tür bestimmt.

Zudem werden durch das vorgeschlagene Verfahren sowie den Lieferwagen Fehlzustellungen von Objekten verhindert. Denn durch Anzeigen der aktuellen Position des zu entnehmenden Objektes wird das im Stand der Technik vielfach auftretende Problem reduziert, dass der das wenigstens eine Objekt entnehmende Zusteller ein falsches Objekt aus dem Laderaum entnimmt. Ferner ermöglichen das Verfahren und der Lieferwagen eine sogenannte ,chaotische Lagerhaltung' der Objekte in dem Laderaum ohne feste Ordnung, da die einzelnen Objekte mittels der Positionsbestimmungseinrichtung und der Anzeigeneinrichtung ohne aufwändiges Suchen einfach lokalisierbar und zeitnah aus dem Laderaum entnommen werden können. Zudem ermöglichen das Verfahren und der Lieferwagen, dass die Anzeigeneinrichtung beim Beladen von Objekten in den Laderaum Hinweise gibt, so dass sich die Packungsdichte der Objekte steigern und, beispielsweise bei einer Beladung nach Gewicht, Transportschäden reduzieren lassen. Ebenso können durch die Anzeigeneinrichtung Hinweise bei einem Überladen des Fahrzeugs gegeben werden. Die Positionsbestimmungseinrichtung und die Anzeigeneinrichtung können getrennt oder einstückig ausgeführt sein.

Der Lieferwagen kann in unterschiedlicher Weise ausgestaltet sein, wobei ebenso ein Personenkraftwagen, abgekürzt PKW, oder ein Lastkraftwagen als Lieferwagen mit umfasst ist. Bevorzugt weist der Lieferwagen eine Fahrerkabine auf, hinter der der Laderaum angeordnet ist. Der Lieferwagen ist bevorzugt als Zustellfahrzeug ausgeführt, um Objekte beispielweise zwischen einem Logistikzentrum, "Warehouse", Lager und/oder Verteilzentrum und Empfängern bzw. Absendern der Objekte zu überbringen. Bei den Empfängern bzw. Absendern der Objekte kann es sich um Personen, Packstationen und/oder vorgenannte Logistikzentren, "Warehouses", Lager oder Verteilzentren handeln. Der Lieferwagen kann personifiziert durch einen Zusteller entlang einer vorgegebenen oder selbst zusammengestellten Wegstrecke eingesetzt werden, um die Objekte an einen oder mehrere Zielorte zu überbringen und/oder an diesen aufzunehmen. Ebenso kann der Lieferwagen autonom eine vorgegebene oder selbst zusammengestreckte Wegstrecke zurücklegen und selbstständig einen oder mehreren Zielorten anhalten, an denen das wenigstens eine Objekt aus dem Laderaum entnehmbar ist.

Der Laderaum kann als offene Ladefläche mit seitlichen Türen und/der Klappen ausgeführt sein. Besonders bevorzugt ist der Laderaum mittels der Türen gegen äußere Einflüsse insbesondere Witterungseinflüsse vollständig verschließbar, so dass unberechtigte Dritte keinen Zugriff auf die in dem Laderaum transportierten Objekte haben. Weiter bevorzugt weist der Laderaum ein quaderartiges Volumen auf und/oder ist der Laderaum mit einer rechteckigen Grundfläche als Ladefläche und/oder Boden versehen, auf dem die Objekte nebeneinander und/oder übereinander abstellbar sind. Das Nutzvolumen des Laderaums kann beispielsweise ≥ 4, ≥ 8, oder ≥ 20 m³ betragen, so dass als Nutzlast Objekte mit einem Gewicht von beispielsweise 650 kg, 1000 kg oder 1350 kg transportierbar sind.

Bei dem Objekt kann es sich um einen beliebigen transportablen Gegenstand handeln, insbesondere um eine Ware, ein Stückgut und/oder eine Sendung. Das Objekt kann Gegenstände des täglichen Bedarfs, wie beispielsweise Verbrauchsmaterialien oder Lebensmittel sowie technische Gegenstände oder Gerätschaften umfassen. Ebenso können Sendungen wie beispielsweise Briefsendungen, Paketsendungen und/oder Print-Produkte wie Prospekte, Broschüren oder Zeitschriften umfasst sein.

Nach einer bevorzugten Weiterbildung des Verfahrens und/oder des Lieferwagens umfasst das Anzeigen der bestimmten Tür und/oder das Anzeigen der aktuellen Position des wenigstens einen Objektes in dem Laderaum ein akustisches, haptisches und/oder visuelles Signal, ein Darstellen auf einem Display des Lieferwagens und/oder eines mobilen Kommunikationsgerätes und/oder ein Darstellen der aktuellen Position des wenigstens einen Objektes und/oder der Tür mittels Projizieren eines Lichtstrahls, insbesondere eines Laserstrahls, auf das wenigstens eine Objekt und/oder die Tür. Das Anzeigen umfasst also nicht nur ein visuelles Signal, sondern kann ebenso durch ein akustisches und/oder haptisches Signal erfolgen.

Beispielsweise wird nach einem Abstellen des Lieferwagens zum Ausliefern eines Objektes dem Zusteller durch ein erstes Signal die Erreichbarkeit des aus dem Laderaum zu entnehmenden Objektes durch eine linke Seitentür, rechte Seitentür oder Heckklappe angezeigt. Der Zusteller muss also nicht mehr nacheinander einzelne Türen und/oder Klappen des Lieferwagens öffnen, bis dass er das zu entnehmende Objekt erreichen kann. Zudem wird der Zusteller mittels eines zweiten Signals über die aktuelle Position des zu entnehmenden Objektes informiert. Das Anzeigen der bestimmten Tür und das Anzeigen der aktuellen Position des wenigstens einen Objektes kann auch gemeinsam auf einem Display des Lieferwagens erfolgen, welches beispielsweise im Fahrerhaus oder an dem Laderaum vorgesehen ist. Zudem kann das Darstellen auf einem mobilen Kommunikationsgerät erfolgen, beispielsweise auf einem Smartphone oder einem mobilen Endgerät des Zustellers, welches dieser zum Scannen der Objekte beim Ein- und/oder Ausladen aus dem Lieferwagen verwendet.

Das Darstellen kann in einer zwei- oder dreidimensionalen Abbildung des Laderaums erfolgen, in der die aktuelle Position des Objektes sowie die zu öffnende Tür hervorgehoben sind, beispielsweise umrahmt und/oder andersfarbig dargestellt sind. Besonders bevorzugt erfolgt das Darstellen der aktuellen Position mittels eines Lichtstrahls, der auf das Objekt und/oder die Tür projiziert ist. Dazu kann an einer Decke des Laderaums ein Laser angeordnet sein, dessen Laserstrahl auf die aktuelle Position und damit auf das Objekt bzw. die Tür gerichtet ist. Zum Umlenken des Strahls können an dem Laser verschwenkbar angeordnete Spiegel vorgesehen sein.

Nach einer bevorzugten Weiterbildung des Verfahrens und/oder des Lieferwagens umfasst das Anzeigen der aktuellen Position des wenigstens einen Objektes in dem Laderaum ein Darstellen eines Hüllkörpers um das wenigstens eine Objekt. Durch den Hüllkörper, beispielsweise mittels eines Licht- und/oder Laserstrahls, lässt sich die aktuelle Position des wenigstens einen Objektes für einen Zusteller besonders einfach erkennbar visualisieren. Die aktuelle Position des wenigstens einen Objektes kann ebenso auf einem Display des Lieferwagens als Hüllkörper, auch Bounding Box genannt, dargestellt werden. Auf dem Display kann ein Abbild der Konturen aller in dem Laderaum befindlichen Objekte als jeweilige zwei- oder dreidimensionale Hüllkörper dargestellt sein, wobei das zu entnehmende Objekt gegenüber den anderen Objekten beispielsweise farblich herausgehoben ist, was zu einem besonders einfachen Auffinden des Objektes in dem Laderaum führt. Das vorgeschlagene Verfahren und/oder der Lieferwagen können zudem weitergebildet sein, dass durch Öffnen einer Tür des Lieferwagens die aktuelle Position des zu entnehmenden Objektes automatisch durch den Lichtstrahl angezeigt wird.

Wie zuvor bereits angesprochen, ist vorgesehen, dass die Mehrzahl Türen eine linke Seitentür, eine rechte Seitentür, und eine Heckklappe des Laderaums umfassen. An der jeweiligen Tür kann eine Anzeige in Form eines Displays vorgesehen sein, in der die aktuelle Position des zu entnehmenden Objektes visualisiert ist. Zum durch die Steuerung bewirkten Öffnen der bestimmten Tür ist die jeweilige Tür zweckmäßiger Weise mit einem elektromechanischen Antrieb vorgesehen. Sofern nach einer exemplarischen Ausgestaltung der Zusteller einen Zustellort für das zuzustellende Objekt erreicht, wird in einem Display im Armaturenbrett des Fahrerhauses die aktuelle Position des zuzustellenden Objektes sowie die zum Entnehmen des Objektes zu benutzende Tür des Laderaums angezeigt, die zu benutzende Tür automatisch geöffnet und durch die Anzeigeeinrichtung die Position des zuzustellenden Objektes in dem Laderaum angezeigt und/oder ein Lichtstrahl auf das Objekt gerichtet.

Die Positionsbestimmungseinrichtung umfasst eine Kamera und/oder einen Laserscanner. Die Positionsbestimmungseinrichtung ist bevorzugt ausgestaltet, anhand einer Größe, eines Gewichts, eines Barcodes, einer Ladeliste der in dem Lieferwagen geladenen Objekte und/oder einer Lieferroute des Lieferwagens die aktuelle Position des wenigstens einen Objektes, insbesondere aller Objekte, in dem Laderaum zu bestimmen. Beim Beladen des Lieferwagens in dem Logistikzentrum können Informationen über die Größe, das Gewicht, und/oder Barcodes der in den Lieferwagen geladenen Objekte und/oder der Zustellroute an den Lieferwagen übermittelt werden. Die insbesondere mikroprozessor- und/oder computerbasiert ausgeführte Steuerung kann dazu eine Datenbank aufweisen, in der die vorgenannten Informationen hinterlegt werden. Durch Abgleich der von der Positionsbestimmungseinrichtung erfassten Objekte mit hinterlegten und/oder erhaltenen Informationen beispielsweise einer Ladeliste lässt sich eine eindeutige Zuordnung der von der Kamera und/oder dem Laserscanner erfassten Objekte herstellen, um die jeweils aktuelle Position in dem Laderaum nachzuverfolgen.

Beispielsweise kann die Positionsbestimmungseinrichtung eingerichtet sein, beim Beladen und/oder Entladen die Objekte hinsichtlich ihrer Größe, ihres Gewichtes, ihres Volumens, ihres Ablageortes in dem Laderaum und/oder an den Objekten vorgesehenen Barcodes zu erfassen und die derart erfassten Objekte während der Fahrt des Lieferwagens hinsichtlich ihrer jeweils aktuellen Position in dem Laderaum nachzuverfolgen. In diesem Zusammenhang ist besonders bevorzugt, dass die Positionsbestimmungseinrichtung eingerichtet ist, einen Identifikationsdatensatz, insbesondere in Form eines an dem wenigstens einen Objekt vorgesehenen Barcodes zu bestimmen. Das Bestimmen des Identifikationsdatensatzes kann durch die Kamera und/oder den Laserscanner erfolgen, wodurch eine eindeutige Zuordnung des wenigstens einen Objektes möglich ist. Bevorzugt ist die Positionsbestimmungseinrichtung ausgestaltet, die Position aller in dem Laderaum geladenen Objekte während der Fahrt zu bestimmen.

Zur Ausgestaltung des Laderaums existieren grundsätzlich verschiedene Möglichkeiten. Nach einer bevorzugten Weiterbildung des Verfahrens und/oder des Lieferwagens ist der Laderaum regalfrei ausgeführt. Nach einer noch weiteren bevorzugten Weiterbildung des Verfahrens und/oder des Lieferwagens ist der Lieferwagen als Elektrofahrzeug und/oder verbrennungsmotorfrei ausgeführt. Aufgrund begrenzter Reichweiten und/oder zum Antreiben von Elektrofahrzeugen benötigter jedoch begrenzter Batteriekapazitäten wird allgemein angestrebt, das Eigengewicht von Elektrofahrzeugen möglichst gering zu halten, um möglichst viel Nutzlast transportieren zu können. Durch die regalfreie Ausgestaltung des Laderaums wird zwar für ein Regal ansonsten notwendiges Gewicht eingespart, jedoch müssen die Objekte auf dem Boden des Laderaums nebeneinander und/oder übereinander in einer sogenannten chaotischen Lagerhaltung angeordnet werden. Trotz Wegfall der Regale ermöglicht das vorgeschlagene Verfahren und der vorgeschlagene Lieferwagen eine Sortierung der transportierten Objekte dahingehend, dass die jeweils aktuelle Position der Objekte mittels der Positionsbestimmungseinrichtung nachverfolgt und mittels der Anzeigeneinrichtung dargestellt wird, so dass ein manuelles Suchen nach einem zu entnehmenden Objekt entfällt.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigen
- Fig. 1: eine schematisch-perspektivische Ansicht eines Lieferwagens gemäß einem bevorzugten Ausführungsbeispiel der Erfindung, und
- Fig. 2: eine schematische Draufsicht des Lieferwagens gemäß Fig. 1 in verschiedenen Zuständen vor, während und nach einer Kurvenfahrt.

### Detaillierte Beschreibung der Ausführungsbespiele

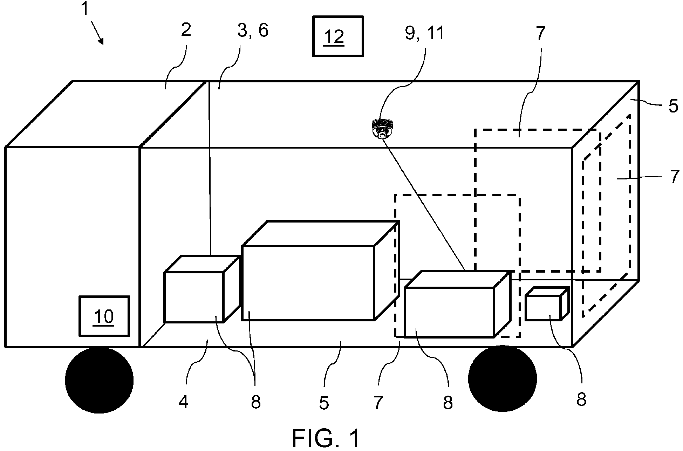

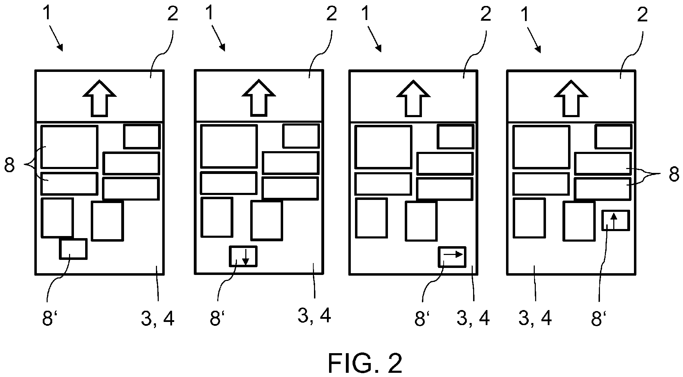

Fig. 1 zeigt einen Lieferwagen 1 in einer schematisch-perspektivischen Ansicht gemäß einem bevorzugten Ausführungsbeispiel der Erfindung, während Fig. 2 den Lieferwagen 1 gemäß Fig. 1 in mehreren schematischen Draufsichten vor, während und nach einer Kurvenfahrt zeigt.

Der Lieferwagen 1 ist als Elektrofahrzeug verbrennungsmotorfrei ausgeführt und weist eine Fahrerkabine 2 mit einem dahinter angeordneten Laderaum 3 auf. Der Laderaum 3 ist durch eine Ladefläche 4, Seitenwände 5 sowie eine Deckenwand 6 begrenzt und bildet derart einen quaderartigen, abgeschlossenen Innenraum aus. In den Seitenwänden 5 sind eine Mehrzahl verschließbarer Türen 7, angedeutet durch gestrichelte Linien 7, vorgesehen, durch die hindurch der Innenraum erreichbar ist. Vorliegend ist der Laderaum 3 mit einer linken Seitentür 7 in der linken Seitenwand 5, einer Heckklappe 7 in der rückwärtigen Seitenwand 5 sowie einer rechten Seitentür 7 in der rechten Seitenwand 5 versehen.

Der Lieferwagen 1 ist als Zustellfahrzeug zum Überbringen und Ausliefern einer Mehrzahl Objekte 8 in Form von Postsendungen ausgeführt. Entsprechend sind auf der Ladefläche 4 in dem Laderaum 3 wie aus Fig. 1 ersichtlich eine Mehrzahl Objekte 8 angeordnet. In einem Logistikzentrum ist der Lieferwagen 1 mit den Objekten 8 beladen worden, um diese entlang einer vorgegebenen Route an jeweilige Empfänger auszuliefern.

Zur Verringerung des Eigengewichtes des als Elektrofahrzeug ausgeführten Lieferwagens 1 sind in dem Laderaum 3 keine Regale vorgesehen. Entsprechend sind alle Objekte 8 auf der Ladefläche 4 neben- und/oder übereinander abgelegt. Aufgrund von durch Anfahren bzw. Beschleunigen, in Kurvenfahrten und durch Abbremsen bzw. Anhalten des Lieferwagens 1 auf die Objekte 8 wirkende Trägheitskräfte können diese auf der Ladefläche 1 verrutschen und während der Fahrt ihre Position in dem Laderaum 3 ändern.

Exemplarisch ist dies dargestellt in Fig. 2, in der der Lieferwagen 1 mit seiner Fahrerkabine 2 und Ladefläche 4 in schematischer Draufsicht in unterschiedlichen Situationen gezeigt ist. Beginnend in der Darstellung ganz links ist die Situation unmittelbar nach dem Einlagern der Objekte 8 in den Laderaum 3 gezeigt, daran rechts anschließend beim Anfahren und Beschleunigen des Lieferwagens 1, daran rechts anschließend bei einer Linkskurve des Lieferwagens 1 und daran rechts anschließend ganz rechts beim Bremsen und Anhalten des Lieferwagens. Von den insgesamt acht im Laderaum 3 angeordneten Objekten 8 wird im Folgenden nur das mit dem Bezugszeichen 8' bezeichnete Objekt 8' betrachtet, wobei für die nachfolgenden Betrachtungen der Einfachheit halber angenommen wird, dass die restlichen Objekte 8 während der Fahrt ihre Position nicht ändern.

In der Darstellung ganz links ist dieses Objekt 8' durch die Heckklappe 7 hindurch auf der Ladefläche 4 des Laderaums 3 in einer ursprünglichen Position abgelegt worden. Bedingt durch ein Anfahren und/oder Beschleunigen des Lieferwagens 1 rutscht dieses Objekt 8' in Richtung Heckklappe 7, wie in der zweiten Darstellung von links gezeigt und mit einem Pfeil angedeutet. Eine darauf folgende Linkskurve bewirkt, dass das Objekt 8' in Richtung der rechten Seitenwand 5 rutscht, dargestellt in der dritten Darstellung von links und angedeutet durch einen Pfeil. Ein darauf folgendes Bremsen und/oder Anhalten des Lieferwagens 1 führt dazu, dass das Objekt 8' in Richtung der Fahrerkabine 2 rutscht, dargestellt in der ganz rechten Darstellung und angedeutet durch einen Pfeil.

Im Vergleich zu der ursprünglichen Position, dargestellt in Fig. 2 ganz links, hat das Objekt 8' bedingt durch Beschleunigen bzw. Anfahren, Linkskurve und Bremsen bzw. Anhalten des Lieferwagens 1 eine andere Position in dem Laderaum 3 angenommen, wie ganz rechts gezeigt. Sofern nun ein Zusteller das in Fig. 2 mit dem Bezugszeichen 8' bezeichnete Objekt 8' dem Laderaum 3 entnehmen will, findet der Zusteller das Objekt 8' nicht mehr an der ursprünglichen Position und muss das Objekt 8'zeitaufwändig suchen: Der Zusteller wird zunächst die linke Seitentür 7 des Laderaums 3 öffnen, in der Hoffnung, das Objekt 8 an seiner ursprünglichen Position zu finden. Nachdem der Zusteller das Objekt 8' nicht durch die linke Seitentür 7 erreichen kann, wird der Zusteller das Objekt 8 suchen und dazu gegebenenfalls auch die Heckklappe 7 öffnen. Schließlich wird der Zusteller erkennen, dass er das nunmehr an der rechten Seite befindliche Objekt nur durch die rechte Seitentür 8 hindurch erreichen und aus dem Laderaum 3 entnehmen kann.

Um zuvor beschriebenes unnötiges Suchen zu verhindern, ist in dem Laderaum 3 an einer Decke desselben eine Positionsbestimmungseinrichtung 9 in Form eines Laserscanners vorgesehen. Die Positionsbestimmungseinrichtung 9 erfasst einerseits beim Laden der Objekte 8 durch die Türen 7 in den Laderaum 3 sowie andererseits beim Ausladen der Objekte 8 durch die Türen 7 diese hinsichtlich ihrer Größe, ihres Gewichtes, ihres Barcodes und ihres Volumens und gleicht die derart erhaltenen Informationen mit einer Ladeliste für den Lieferwagen 1 ab. Dazu ist die Positionsbestimmungseinrichtung 9 mit einer computerbasierten Steuerung 10 verbunden, der in dem Lieferwagen 1 angeordnet ist. Aufgrund der von den Objekten 8 erfassten Größen, Gewicht, Barcodes und Volumens kann die Positionsbestimmungseinrichtung 9 während der Fahrt des Lieferwagen 1 die jeweils aktuelle Position der einzelnen Objekte 8 in dem Laderaum 8 nachverfolgen und die jeweils aktuelle Position der Objekte 8 in einer Datenbank der Steuerung 10 hinterlegen. Dazu ist die Steuerung mit einer Software bzw. einem Algorithmus zur Bildverarbeitung versehen, um aus den von der Positionsbestimmungseinrichtung 9 erhaltenen Informationen die jeweils aktuelle Position der Objekte 8 zu bestimmen.

Sofern nun der Zusteller eines der in den Laderaum 3 geladenen Objekte 8 entnehmen möchte, wird auf einer mit der Steuerung 10 in Kommunikationsverbindung stehenden und als Display 11 ausgestalteten Anzeigeneinrichtung 11 die aktuelle Position des zu entnehmenden Objektes 8 sowie die dazu zu öffnende Tür 7 angezeigt. Die Anzeigeneinrichtung 11 kann in ein Armaturenbrett in der Fahrerkabine 1 des Lieferwagens 1 integriert sein. Ebenso können außen an dem Laderaum 3 an den Türen 7 ein oder eine Mehrzahl Displays 11 vorgesehen sein, auf denen die aktuelle Position und die zu öffnende Tür angezeigt wird.

Ausgehend von der jeweils aktuellen Position der Objekte 8 bestimmt die Steuerung 10 die jeweilige Türe 7 aus der Mehrzahl Türen 7 mit dem jeweils geringsten Abstand zu der jeweiligen aktuellen Position des jeweiligen Objektes 8. Die bestimmte Tür 7 wird auf der Anzeigeneinrichtung 11 dargestellt. Im Falle von an den Türen 7 vorgesehenen Anzeigeneinrichtungen 11 können diese ebenso als Leuchten ausgebildet sein, so dass, zum Entnehmen eines Objektes 8 aus dem Laderaum 3, die Leuchte an der zu öffnenden Tür 7 aktiviert werden kann. Ebenso kann die Steuerung 10 ausgebildet sein, ein Öffnen der betreffenden Tür 7 zu bewirken. Dazu können die Türen 7 mit einem elektromechanischen Antrieb ausgestattet sein, der in Kommunikationsverbindung mit der Steuerung steht.

Grundsätzlich kann das Anzeigen der bestimmten Tür 7 und das Anzeigen der aktuellen Position des durch den Zusteller zu entnehmenden Objektes 8 in dem Laderaum 3 durch ein akustisches, haptisches und/oder visuelles Signal erfolgen. Auf dem zuvor genannten Display können die in dem Laderaum 3 geladenen Objekte 8 als Hüllkörper dargestellt sein, wobei das zu entnehmende Objekt 8 zur leichteren Auffindbarkeit in einer anderen Farbe oder mit einer Schraffierung dargestellt ist.

Ebenso kann die bestimmte Tür 7 und die aktuellen Position des durch zu entnehmenden Objektes 8 auf einem mobilen Kommunikationsgerät 12 des Zustellers dargestellt werden, welches in Kommunikationsverbindung mit der Steuerung 10 steht. Das mobile Kommunikationsgerät 12 kann als Smartphone oder mobiles Endgerät zum Scannen der Objekte 9 beim Be- und Entladen derselben ausgeführt sein. Die Positionsbestimmungseinrichtung 9 und die Anzeigeneinrichtung 11 können ebenso einstückig als an der Decke des Laderaums 3 angeordneter Laserscanner ausgeführt sein, durch den das Darstellen der aktuellen Position des wenigstens einen Objektes 8 mittels Projizieren eines Laserstrahls und/oder einer Hüllkurve möglich ist.

Im Ergebnis wird durch den Lieferwagen 1 und ein entsprechendes Verfahren eine einfache Möglichkeit geschaffen, Objekte 8 in dem Laderaum 3 ohne unnötiges Suchen einfach und schnell aufzufinden.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

### Bezugszeichenliste

| | |
|---|---|
| Lieferwagen | 1 |
| Fahrerkabine | 2 |
| Laderaum | 3 |
| Ladefläche | 4 |
| Seitenwand | 5 |
| Deckenwand | 6 |
| Tür | 7 |
| Objekt | 8 |
| Positionsbestimmungseinrichtung | 9 |
| Steuerung | 10 |
| Anzeigeneinrichtung, Display | 11 |
| Mobiles Kommunikationsgerät | 12 |

## Patentansprüche

1. Computerunterstütztes Verfahren zum Lokalisieren wenigstens eines in einem Laderaum (3) eines Lieferwagens (1) transportierten Objektes (8) einer Mehrzahl auf einer Ladefläche (4) des Laderaums (3) nebeneinander angeordneter Objekte (8), wobei der Laderaum (3) eine Mehrzahl Türen (7) zum Entnehmen des wenigstens einen Objektes (8) aus dem Laderaum (3) und eine an der Decke des Laderaums (3) vorgesehene Positionierbestimmungseinrichtung (9) aufweist, wobei die Mehrzahl Türen (7) eine linke Seitentür (7), eine rechte Seitentür (7) und eine Heckklappe des Laderaums (3) umfassen, und der Lieferwagen (1) eine Steuerung (10) aufweist, mit den Schritten:
Erfassen eines Ablageortes des Objektes (8) in dem Laderaum (3) beim Beladen des Laderaumes (3) mittels der mit der Steuerung (10) in Kommunikationsverbindung stehenden und eine Kamera und/oder einen Laserscanner umfassende Positionierbestimmungseinrichtung (9),
während einer Fahrt des Lieferwagens (1) Nachhalten einer in der Datenbank der Steuerung (10) hinterlegten aktuellen Position des Objektes (8) auf Basis einer von einem Algorithmus zur Bildverarbeitung aus den von der Positionierbestimmungseinrichtung (9) erhaltenen Informationen ermittelten aktuellen Position des Objektes (8) mittels der Steuerung (10), und
zum Entnehmen des wenigstens einen Objektes (8) aus dem Laderaum (3),
Bestimmen der Tür (7) aus der Mehrzahl Türen (7) mit dem geringsten Abstand zu der in der Datenbank hinterlegten aktuellen Position mittels der Steuerung (10),
Anzeigen der bestimmten Tür (7) mittels einer mit der Steuerung (10) in Kommunikationsverbindung stehenden Anzeigeneinrichtung (11),
Öffnen der bestimmten Tür (7) mittels der Steuerung (10) und
Anzeigen der in der Datenbank hinterlegten aktuellen Position des wenigstens einen Objektes (8) in dem Laderaum (3) mittels der Anzeigeneinrichtung (11).

2. Verfahren nach dem vorhergehenden Anspruch, mit den Schritten:
Erfassen eines Ablageortes aller Objekte (8) einer Mehrzahl von Objekten in dem Laderaum (3) beim Beladen des Laderaumes (3) mittels der Positionierbestimmungseinrichtung (9),
während der Fahrt des Lieferwagens (1) Nachhalten der in der Datenbank hinterlegten aktuellen Positionen aller Objektes (8) auf Basis der von dem Algorithmus zur Bildverarbeitung aus den von der Positionierbestimmungseinrichtung (9) erhaltenen Informationen ermittelten aktuellen Positionen aller Objekte (8).

3. Lieferwagen (1) mit einem Laderaum (3) zum Transportieren wenigstens eines Objektes (8) mit
einer Steuerung (10),
einer mit der Steuerung (10) in Kommunikationsverbindung stehenden und eine Kamera und/oder einen Laserscanner umfassende Positionsbestimmungseinrichtung (9) eingerichtet zum Erfassen eines Ablageortes des Objektes (8) einer Mehrzahl auf einer Ladefläche (4) des Laderaums (3) nebeneinander angeordneter Objekte (8) in dem Laderaum (3) beim Beladen des Laderaumes (3),
wobei die Steuerung eingerichtet ist, während einer Fahrt des Lieferwagens (1) eine in einer Datenbank der Steuerung hinterlegte aktuelle Position des Objektes (8) auf Basis einer aus den von der Positionierbestimmungseinrichtung (9) erhaltenen Informationen mittels eines Algorithmus zur Bildverarbeitung ermittelten aktuellen Position des Objektes (8) nachzuhalten und
einer mit der Steuerung (10) in Kommunikationsverbindung stehenden Anzeigeneinrichtung (11), wobei
der Laderaum (3) eine Mehrzahl Türen (7) zum Entnehmen der Objekte (8) aus dem Laderaum (3) aufweist, wobei die Mehrzahl Türen (7) eine linke Seitentür (7), eine rechte Seitentür (7) und eine Heckklappe des Laderaums (3) umfassen, und die Positionierbestimmungseinrichtung (9) an einer Decke des Laderaums (3) angeordnet ist,
die Steuerung (10) eingerichtet ist, zum Entnehmen des wenigstens einen Objektes (8) aus dem Laderaum (3), die Tür (7) aus der Mehrzahl Türen (7) mit dem geringsten Abstand zu der in der Datenbank hinterlegten aktuellen Position des wenigstens einen Objektes (8) zu bestimmen, die Anzeigeneinrichtung (11) zum Anzeigen der bestimmten Tür (7) anzusteuern und ein Öffnen der bestimmten Tür (7) zu bewirken und die Anzeigeneinrichtung (11) zum Anzeigen der in der Datenbank hinterlegten aktuellen Position des wenigstens einen Objektes (8) in dem Laderaum (3) anzusteuern.

4. Verfahren und/oder Lieferwagen (1) nach einem der vorhergehenden Ansprüche, wobei das Anzeigen der bestimmten Tür (7) und/oder das Anzeigen der aktuellen Position des wenigstens einen Objektes (8) in dem Laderaum (3) ein akustisches, haptisches und/oder visuelles Signal, ein Darstellen auf einem Display (11) des Lieferwagens (1) und/oder eines mobilen Kommunikationsgerätes (12) und/oder ein Darstellen der in der Datenbank hinterlegten aktuellen Position des wenigstens einen Objektes (8) und/oder der Tür (7) mittels Projizieren eines Lichtstrahls, insbesondere eines Laserstrahls, auf das wenigstens eine Objekt (8) und/oder die Tür (7) umfasst.

5. Verfahren und/oder Lieferwagen (1) nach einem der vorhergehenden Ansprüche, wobei das Anzeigen der in der Datenbank hinterlegten aktuellen Position des wenigstens einen Objektes (8) in dem Laderaum (3) ein Darstellen eines Hüllkörpers um das wenigstens eine Objekt (8) umfasst.

6. Verfahren und/oder Lieferwagen (1) nach einem der vorhergehenden Ansprüche, wobei die Positionsbestimmungseinrichtung (9) eingerichtet ist, einen Identifikationsdatensatz des wenigstens einen Objektes (8) zu bestimmen.

7. Verfahren und/oder Lieferwagen (1) nach einem der vorhergehenden Ansprüche, wobei der Laderaum (3) regalfrei ausgeführt ist.

8. Verfahren und/oder Lieferwagen (1) nach einem der vorhergehenden Ansprüche, wobei der Lieferwagen (1) als Elektrofahrzeug und/oder verbrennungsmotorfrei ausgeführt ist.

## Claims

1. Computer-aided method for locating at least one object (8), transported in a load compartment (3) of a delivery van (1), of a plurality of objects (8) arranged beside one another on a load surface (4) of the load compartment (3), wherein the load compartment (3) has a plurality of doors (7) for removing the at least one object (8) from the load compartment (3) and a position determination device (9) provided on the ceiling of the load compartment (3), wherein the plurality of doors (7) comprise a left-hand side door (7), a right-hand side door (7) and a tailgate of the load compartment (3), and the delivery van (1) has a controller (10), having the steps of:
capturing a storage location of the object (8) in the load compartment (3) when loading the load compartment (3) by means of the position determination device (9) which is communicatively connected to the controller (10) and comprises a camera and/or a laser scanner,
during a journey of the delivery van (1), tracking a current position of the object (8), which is stored in the database of the controller (10), on the basis of a current position of the object (8) determined by an image processing algorithm from the information obtained from the position determination device (9) by means of the controller (10), and
for removing the at least one object (8) from the load compartment (3),
determining that door (7) from the plurality of doors (7) with the shortest distance to the current position, which is stored in the database, by means of the controller (10),
indicating the determined door (7) by means of an indication device (11) communicatively connected to the controller (10),
opening the determined door (7) by means of the controller (10), and
indicating the current position of the at least one object (8) in the load compartment (3), which is stored in the database, by means of the indication device (11).

2. Method according to the preceding claim, having the steps of:
capturing a storage location of all objects (8) of a plurality of objects in the load compartment (3) when loading the load compartment (3) by means of the position determination device (9),
during the journey of the delivery van (1), tracking the current positions of all objects (8), which are stored in the database, on the basis of the current positions of all objects (8) determined by the image processing algorithm from the information obtained from the position determination device (9).

3. Delivery van (1) having a load compartment (3) for transporting at least one object (8), having
a controller (10),
a position determination device (9) which is communicatively connected to the controller (10) and comprises a camera and/or a laser scanner and is set up to capture a storage location of the object (8) of a plurality of objects (8) arranged beside one another on a load surface (4) of the load compartment (3) in the load compartment (3) when loading the load compartment (3),
wherein the controller is set up, during a journey of the delivery van (1), to track a current position of the object (8), which is stored in a database of the controller, on the basis of a current position of the object (8) determined from the information obtained from the position determination device (9) by means of an image processing algorithm, and
an indication device (11) communicatively connected to the controller (10), wherein
the load compartment (3) has a plurality of doors (7) for removing the objects (8) from the load compartment (3), wherein the plurality of doors (7) comprise a left-hand side door (7), a right-hand side door (7) and a tailgate of the load compartment (3), and the position determination device (9) is arranged on a ceiling of the load compartment (3),
the controller (10), for removing the at least one object (8) from the load compartment (3), is set up to determine that door (7) from the plurality of doors (7) with the shortest distance to the current position of the at least one object (8), which is stored in the database, to control the indication device (11) to indicate the determined door (7) and to cause opening of the determined door (7) and to control the indication device (11) to indicate the current position of the at least one object (8) in the load compartment (3), which is stored in the database.

4. Method and/or delivery van (1) according to one of the preceding claims, wherein the indication of the determined door (7) and/or the indication of the current position of the at least one object (8) in the load compartment (3) comprise(s) an acoustic, haptic and/or visual signal, a presentation on a display (11) of the delivery van (1) and/or of a mobile communication device (12) and/or a presentation of the current position of the at least one object (8) and/or of the door (7), which is stored in the database, by projecting a light beam, in particular a laser beam, onto the at least one object (8) and/or the door (7).

5. Method and/or delivery van (1) according to one of the preceding claims, wherein the indication of the current position of the at least one object (8) in the load compartment (3), which is stored in the database, comprises a presentation of a bounding volume around the at least one object (8).

6. Method and/or delivery van (1) according to one of the preceding claims, wherein the position determination device (9) is set up to determine an identification data record of the at least one object (8).

7. Method and/or delivery van (1) according to one of the preceding claims, wherein the load compartment (3) is designed without shelves.

8. Method and/or delivery van (1) according to one of the preceding claims, wherein the delivery van (1) is in the form of an electric vehicle and/or does not have an internal combustion engine.

## Revendications

1. Procédé assisté par ordinateur pour localiser au moins un objet (8) transporté dans un espace de chargement (3) d'un véhicule de livraison (1), parmi une pluralité d'objets (8) disposés les uns à côté des autres sur une surface de chargement (4) de l'espace de chargement (3), l'espace de chargement (3) possédant une pluralité de portes (7) servant à retirer l'au moins un objet (8) hors de l'espace de chargement (3) et un dispositif de détermination de positionnement (9) prévu sur le plafond de l'espace de chargement (3), la pluralité de portes (7) comportant une porte latérale gauche (7), une porte latérale droite (7) et un hayon de l'espace de chargement (3), et le véhicule de livraison (1) possédant une commande (10), comprenant les étapes suivantes :
détection d'un emplacement de dépose de l'objet (8) dans l'espace de chargement (3) lors du chargement de l'espace de chargement (3) au moyen du dispositif de détermination de positionnement (9) qui se trouve en liaison de communication avec la commande (10) et qui comprend une caméra et/ou un dispositif de balayage à laser,
pendant un trajet du véhicule de livraison (1), maintien d'une position actuelle de l'objet (8) stockée dans la base de données de la commande (10) sur la base d'une position actuelle de l'objet (8) déterminée au moyen de la commande (10) par un algorithme de traitement d'image à partir des informations obtenues du dispositif de détermination de positionnement (9), et
en vue de retirer l'au moins un objet (8) hors de l'espace de chargement (3),
détermination de la porte (7) parmi la pluralité de portes (7) avec la plus petite distance par rapport à la position actuelle stockée dans la base de données au moyen de la commande (10),
indication de la porte (7) déterminée au moyen d'un dispositif d'indication (11) qui se trouve en liaison de communication avec la commande (10),
ouverture de la porte (7) déterminée au moyen de la commande (10) et
indication de la position actuelle de l'au moins un objet (8) dans l'espace de chargement (3) stockée dans la base de données au moyen du dispositif d'indication (11).

2. Procédé selon la revendication précédente, comprenant les étapes suivantes :
détection d'un emplacement de dépose de tous les objets (8) d'une pluralité d'objets dans l'espace de chargement (3) lors du chargement de l'espace de chargement (3) au moyen du dispositif de détermination de positionnement (9),
pendant le trajet du véhicule de livraison (1), maintien des positions actuelles de tous les objets (8) stockées dans la base de données sur la base des positions actuelles de tous les objets (8) déterminées par l'algorithme de traitement d'image à partir des informations obtenues du dispositif de détermination de positionnement (9).

3. Véhicule de livraison (1) comprenant un espace de chargement (3) servant au transport d'au moins un objet (8), comprenant
une commande (10),
un dispositif de détermination de position (9) en liaison de communication avec l'unité de commande (10) et comprenant une caméra et/ou un dispositif de balayage à laser, conçu pour détecter un emplacement de dépose de l'objet (8) parmi une pluralité d'objets (8) disposés les uns à côté des autres sur une surface de chargement (4) de l'espace de chargement (3) dans l'espace de chargement (3) lors du chargement de l'espace de chargement (3),
la commande étant conçue pour maintenir une position actuelle de l'objet (8) stockée dans une base de données de la commande pendant un trajet du véhicule de livraison (1) au moyen d'un algorithme de traitement d'image sur la base d'une position actuelle de l'objet (8) déterminée à partir des informations obtenues du dispositif de détermination de positionnement (9) et
un dispositif d'indication (11) qui se trouve en liaison de communication avec la commande (10),
l'espace de chargement (3) possédant une pluralité de portes (7) servant à retirer les objets (8) hors de l'espace de chargement (3), la pluralité de portes (7) comprenant une porte latérale gauche (7), une porte latérale droite (7) et un hayon de l'espace de chargement (3), et le dispositif de détermination de positionnement (9) étant disposé sur un plafond de l'espace de chargement (3),
la commande (10) étant conçue pour, en vue de retirer l'au moins un objet (8) hors de l'espace de chargement (3), déterminer la porte (7) parmi la pluralité de portes (7) avec la plus petite distance par rapport à la position actuelle de l'au moins un objet (8) stockée dans la base de données, commander le dispositif d'indication (11) pour indiquer la porte (7) déterminée et pour provoquer une ouverture de la porte (7) déterminée et commander le dispositif d'indication (11) pour indiquer la position actuelle stockée dans la base de données de l'au moins un objet (8) dans l'espace de chargement (3).

4. Procédé et/ou véhicule de livraison (1) selon l'une des revendications précédentes, l'indication de la porte (7) déterminée et/ou l'indication de la position actuelle de l'au moins un objet (8) dans l'espace de chargement (3) étant un signal acoustique, haptique et/ou visuel, une représentation sur un dispositif d'affichage (11) du véhicule de livraison (1) et/ou d'un appareil de communication mobile (12) et/ou une représentation de la position actuelle stockée dans la base de données de l'au moins un objet (8) et/ou de la porte (7) au moyen de la projection d'un faisceau lumineux, notamment d'un faisceau laser, sur l'au moins un objet (8) et/ou sur la porte (7).

5. Procédé et/ou véhicule de livraison (1) selon l'une des revendications précédentes, l'indication de la position actuelle stockée dans la base de données de l'au moins un objet (8) dans l'espace de chargement (3) comprenant une représentation d'un corps enveloppant autour de l'au moins un objet (8).

6. Procédé et/ou véhicule de livraison (1) selon l'une des revendications précédentes, le dispositif de détermination de positionnement (9) étant conçu pour déterminer un jeu de données d'identification de l'au moins un objet (8).

7. Procédé et/ou véhicule de livraison (1) selon l'une des revendications précédentes, l'espace de chargement (3) étant réalisé sans rayonnage.

8. Procédé et/ou véhicule de livraison (1) selon l'une des revendications précédentes, le véhicule de livraison (1) étant réalisé sous la forme d'un véhicule électrique et/ou sans moteur à combustion interne.
